# EUROPÄISCHE PATENTANMELDUNG

(11) **EP 2 719 463 A1**
(43) Veröffentlichungstag der Anmeldung: **16.04.2014**
(21) Anmeldenummer: 13186660.0
(22) Anmeldetag: 30.09.2013
(51) Int. Cl.: B04C 3/04, B04C 3/06

(54) **Zyklonabscheider**

(30) Priorität: 15.10.2012 DE 102012020134
(71) Anmelder: MANN + HUMMEL GMBH, 71638 Ludwigsburg (DE)
(72) Erfinder: Wübbeling, Martin, 68161 Mannheim (DE); Winter, Manfred, 74906 Bad Rappenau (DE)

(57) **Zusammenfassung**

Um einen Zyklonabscheider (100; 100'; 100"; 100"') zum Abscheiden von flüssigen und/ oder festen Partikeln aus einem Gasstrom, aufweisend
- eine Zyklonanordnung mit einer Mehrzahl von Einzelzyklonen, die zum Abscheiden der Partikel aus dem Gasstrom jeweils ein Zellenrohr (10) mit einer Leitvorrichtung (16) aufweisen, wobei die Leitvorrichtung (16) dazu ausgebildet ist, den Gasstrom in Rotation zu versetzen, und
- mindestens einen senkrecht zur Längsachse (X) des Zyklonabscheiders (100; 100'; 100"; 100"') angeordneten Partikelauslass (30, 32) zum Ableiten der abgeschiedenen Partikel aus der Zyklonanordnung, wobei die Zellenrohre (10) zur gezielten Ableitung der durch die Rotation abgeschiedenen Partikel zum Partikelauslass (30, 32) jeweils mindestens eine dem Partikelauslass (30, 32) zugewandte Partikelauslassöffnung (12) aufweisen, so weiterzubilden, dass das Ableiten der durch die Rotation abgeschiedenen Partikel verbessert wird, wird vorgeschlagen, dass die Partikelauslassöffnungen (12) von zumindest einem Teil der in Richtung einer ersten Senkrechten (Y) zur Längsachse (X) des Zyklonabscheiders (100; 100'; 100"; 100"') zueinander benachbarten Einzelzyklone, beispielsweise der in Richtung der Höhe der Zyklonanordnung übereinander angeordneten Einzelzyklone, in Richtung der Längsachse (X) des Zyklonabscheiders (100; 100'; 100"; 100"') versetzt zueinander angeordnet sind.

## Beschreibung

### Technisches Gebiet

Die Erfindung betrifft einen Zyklonabscheider nach dem Oberbegriff des Anspruchs 1.

### Stand der Technik

Ein als Vielzellenzyklon ausgebildeter Zyklonabscheider, der als Vorabscheider für einen Luftfilter dient, ist beispielsweise aus den Druckschriften DE 10 2010 014 278 A1 und DE 10 2008 01 11 86 A1 bekannt.

Des Weiteren ist ein Luftfilter mit einem als Vielzellenzyklon ausgebildeten Vorabscheider aus der Druckschrift WO 2009 10 65 91 A2 bekannt. Bei diesem bekannten Luftfilter ist eine Abströmgeometrie des Vorabscheiders auf eine Anströmgeometrie eines Filterelementes abgestimmt. Dies kann entweder durch eine entsprechende Verteilung der Einzelzyklone entlang des Umfangs des Vorabscheiders, oder auch durch eine entsprechende Ausrichtung der Zyklonauslässe erfolgen. Dabei können sowohl die gesamten Zyklone als auch nur deren Auslässe geneigt sein.

Bei diesen bekannten Zyklonabscheidern besteht das Problem, dass die abgeschiedenen Partikel benachbarter Einzelzyklone sich treffen und im Zyklonabscheider (bzw. Zyklonblock) anhäufen können anstatt durch den Partikelauslass abgeleitet oder ausgelassen zu werden. Dies ist insbesondere bei Zyklonabscheidern ein Problem, bei denen die Partikel nicht zusätzlich abgesaugt werden. Diese Partikelansammlung im Zyklonabscheider kann zum Verstopfen von einzelnen Partikelauslassöffnungen und führen und verschlechtert damit den Vorabscheidegrad des Zyklonabscheiders.

### Offenbarung der Erfindung

Ausgehend von den vorstehend dargelegten Nachteilen und Unzulänglichkeiten sowie unter Würdigung des umrissenen Standes der Technik liegt der vorliegenden Erfindung die Aufgabe zugrunde, einen Zyklonabscheider der eingangs genannten Art so weiterzubilden, dass das Ableiten der durch die Rotation abgeschiedenen Partikel verbessert wird.

Diese Aufgabe wird durch einen Zyklonabscheider mit den im Anspruch 1 angegebenen Merkmalen gelöst. Vorteilhafte Ausgestaltungen und zweckmäßige Weiterbildungen der vorliegenden Erfindung sind in den Unteransprüchen gekennzeichnet.

Mithin basiert die vorliegende Erfindung darauf, dass die Partikelauslassöffnungen sowie ggf. die abströmseitigen Enden von zumindest einem Teil der in Richtung einer ersten Senkrechten (Y) zur Längsachse (X) des Zyklonabscheiders zueinander benachbarten Einzelzyklone, insbesondere der in Richtung der Höhe der Zyklonanordnung übereinander angeordneten Einzelzyklone, beispielsweise der in Fallrichtung der abgeschiedenen Partikel übereinander angeordneten Einzelzyklone, in Richtung der Längsachse (X) des Zyklonabscheiders versetzt zueinander angeordnet sind. Die Austragswege der abgeschiedenen Partikel von den jeweiligen Partikelauslassöffnungen der Zellenrohre zum diesen Partikelauslassöffnungen zugewandten Partikelauslass des Zyklonabscheiders sind also zumindest teilweise versetzt, insbesondere axial versetzt, zueinander angeordnet.

Die Einzelzyklone sind bevorzugt als Inline-Zyklonzellen ausgeführt, bei welchen die Strömung im Wesentlichen axial verläuft, wobei durch ein stromauf angeordnetes Leitwerk eine spiralförmige Strömung im Inneren eines (Zyklon-)zellenrohrs erzeugt wird, durch die Fliehkraft Partikel nach außen getragen werden und anschließend die gereinigte Luft durch ein auf der stromabwärtigen Seite in das Zellenrohr hineinragendes Tauchrohr aus der Inline-Zyklonzelle austritt.

Der erfindungsgemäße Versatz der Partikelauslassöffnungen bewirkt, dass diejenigen Partikel, die aus Einzelzyklonen mit versetzt zueinander angeordneten Partikelauslassöffnungen abgeschieden werden, in unterschiedlichen Ebenen abgeleitet werden. Partikel, die aus Einzelzyklonen mit versetzt zueinander angeordneten Partikelauslassöffnungen abgeschieden werden, treffen also nicht aufeinander und werden zuverlässig aus dem Zyklonabscheider abgeführt. Durch den Versatz der Partikelauslassöffnungen wird eine Anhäufung der abgeschiedenen Partikel, die aus den Partikelauslassöffnungen austreten, im Zyklonabscheider vermieden oder zumindest gemildert. Im Gegensatz zum Stand der Technik, bei dem die Partikelauslassöffnungen und die abströmseitigen Enden der Zellenrohre alle in einer senkrecht zur Längsachse des Zyklonabscheiders angeordneten Ebene, also alle in der Fallrichtung der abgeschiedenen Partikel angeordnet sind, werden bei dem erfindungsgemäßen Zyklonabscheider die abgeschiedenen Partikel deutlich effektiver aus der Zyklonanordnung abgeleitet und aus dem Zyklonabscheider ausgeschieden. Der Fachmann wird dies insbesondere bei Zyklonabscheidern zu schätzen wissen, bei denen die abgeschiedenen Partikel nicht zusätzlich abgesaugt werden.

Bei einem als Vorabscheider ausgebildeten Zyklonabscheider wird durch den erfindungsgemäßen axialen Versatz der Partikelauslassöffnungen im Vergleich zum Stand der Technik der Vorabscheidegrad deutlich erhöht und/oder über die Betriebsdauer aufrecht erhalten.

Gemäß einer vorteilhaften Ausführungsform der Erfindung kann der axiale, also in Richtung der Längsachse der Zellenrohre erfolgende, Versatz der Partikelauslassöffnungen in zwei Ebenen bzw. in zwei zur Längsachse (X) des Zyklonabscheiders und zueinander winklig angeordneten, Richtungen (Y, Z) erfolgen. Hierbei sind die Partikelauslassöffnungen von zumindest einem Teil der in Richtung einer zweiten Senkrechten (Z), die zur Längsachse (X) des Zyklonabscheiders sowie zur ersten Senkrechten (Y) senkrecht angeordnet ist, zueinander benachbarten Einzelzyklone in Richtung der Längsachse (X) des Zyklonabscheiders versetzt zueinander angeordnet. Vorteilhafterweise können also beispielsweise in Richtung der Höhe der Zyklonanordnung zueinander benachbarte Einzelzyklone und in Richtung der Querrichtung der Zyklonanordnung zueinander benachbarte Einzelzyklone, also sowohl übereinander angeordnete Einzelzyklone als auch nebeneinander angeordnete Einzelzyklone, in Richtung der Längsachse (X) des Zyklonabscheiders versetzt zueinander angeordnet sein.

Der Versatz der Partikelauslassöffnungen der in Richtung der zweiten Senkrechten (Z) zueinander benachbarten Einzelzyklone bewirkt wiederum, dass diejenigen Partikel, die aus diesen Einzelzyklonen abgeschieden werden sich nicht treffen, sondern in unterschiedlichen Ebenen abgeleitet werden. Der Versatz der Partikelauslassöffnungen in zwei Ebenen hat somit den Vorteil, dass die Vermeidung der Anhäufung der abgeschiedenen Partikel sowohl in der horizontalen als auch in der vertikalen Lage des Zyklonabscheiders stattfindet.

Der Versatz der Partikelauslassöffnungen in Richtung der Längsachse (X) des Zyklonabscheiders, also der Versatz der Partikelauslassöffnungen der in Richtung der ersten Senkrechten (Y) zueinander benachbarten Einzelzyklone und/oder der Versatz der Partikelauslassöffnungen der in Richtung der zweiten Senkrechten (Z) zueinander benachbarten Einzelzyklone, kann gemäß einer vorteilhaften Ausführungsform der vorliegenden Erfindung durch eine Schrägstellung der Längsachse der Zellenrohre zur Längsachse (X) des Zyklonabscheiders erfolgen.

Die Längsachse der Zellenrohre kann aber auch parallel zur Längsachse des Zyklonabscheiders angeordnet sein. In diesem Fall kann der Versatz der Partikelauslassöffnungen in Richtung der Längsachse (X) des Zyklonabscheiders durch einen Versatz der Partikelauslassöffnungen in Richtung der Längsachse (18) der Zellenrohre erfolgen. Der Versatz der Partikelauslassöffnungen in Richtung der Längsachse der Zellenrohre kann beispielsweise durch eine unterschiedliche Länge Zellenrohre oder bevorzugt durch einen axialen Versatz der einzelnen Zellenrohre zueinander, also einen Zyklonzellenversatz, erfolgen. In diesem Fall sind auch die abströmseitigen Enden der Zellenrohre von zumindest einem Teil der
- in Richtung de ersten Senkrechten (Y) zur Längsachse (X) des Zyklonabscheiders zueinander benachbarten Einzelzyklone und/oder
- in Richtung der zweiten Senkrechten (Z) zueinander benachbarten Einzelzyklone axial, also in Richtung der Längsachse des Zyklonabscheiders bzw. Richtung der Längsachse der Zellenrohre, versetzt angeordnet.

Gemäß einem weiteren vorteilhaften Ausführungsbeispiel können in Strömungsrichtung die Leitvorrichtungen oder Leitschaufeln von zumindest einem Teil der Zellenrohre axial versetzt angeordnet sein.

Unabhängig hiervon oder in Verbindung hiermit kann das Ausmaß des Versatzes der Partikelauslassöffnungen in Richtung der Längsachse (X) des Zyklonabscheiders in Abhängigkeit von der Anzahl der zueinander benachbarten Einzelzyklone, also der nebeneinander oder übereinander angeordneten Einzelzyklone, und/oder von der Entfernung der Staubaustrittsöffnung zum Partikelauslass, dem diese Partikelauslassöffnung zugewandt ist, gewählt werden.

Vorteilhafterweise ist der Versatz umso größer, je mehr Einzelzyklone in der jeweiligen Senkrechten zueinander benachbart, also übereinander oder nebeneinander, angeordnet sind. Gemäß einer vorteilhaften Ausführungsform der vorliegenden Erfindung wird also der Winkel zwischen der Verbindungslinie der versetzt zueinander angeordneten Partikelauslassöffnungen und der ersten Senkrechten (Y) und/oder der zweiten Senkrechten (Z) in Abhängigkeit von der Anzahl der in der ersten Senkrechten (Y) bzw. der zweiten Senkrechten (Z) zueinander benachbarten Einzelzyklone gewählt. Dabei kann die Verbindungslinie der versetzt zueinander angeordneten Staubaustrittsöffnungen mindestens eine gerade Linie sein. Die Staubaustrittsöffnungen können also in mindestens einer zur ersten Senkrechten (Y), zur zweiten Senkrechten (Z) und zur Längsachse (X) des Zyklonabscheiders schiefen Referenzebenen angeordnet sein.

Das Ausmaß oder die Stärke des axialen Versatzes der Partikelauslassöffnungen kann also gemäß einer vorteilhaften Ausführungsform der vorliegenden Erfindung in Abhängigkeit von der Anzahl der auf einer gedachten Linie vom dem Partikelauslass abgewandten Bereich zum diesem Bereich gegenüberliegenden Bereich des Zyklonabscheiders angeordneten Einzelzyklone gewählt werden. Dabei ist der Versatz der Staubaustrittsöffnungen vorzugsweise umso größer, je mehr Einzelzyklone zueinander benachbart sind und insbesondere in Schwerkraftrichtung übereinander liegen.

Alternativ kann der Versatz der Partikelauslassöffnungen in Richtung der Längsachse (X) des Zyklonabscheiders, also der Versatz der Partikelauslassöffnungen der in Richtung der ersten Senkrechten (Y) zueinander benachbarten Einzelzyklone und/oder der Partikelauslassöffnungen der in Richtung der zweiten Senkrechten (Z) zueinander benachbarten Einzelzyklone, mit zunehmender Entfernung der Partikelaustrittsöffnung zum Partikelauslass, dem diese Partikelauslassöffnung zugewandt ist, abnehmen. In diesem Fall ist die Verbindungslinie der versetzt zueinander angeordneten Partikelaustrittsöffnungen keine gerade Linie, sondern eine gebogene Linie. Die versetzt zueinander angeordneten Partikelaustrittsöffnungen sind also sphärisch angeordnet.

Unabhängig hiervon oder in Verbindung hiermit kann der Versatz der Partikelauslassöffnungen, der in Richtung der ersten Senkrechten (Y) zueinander benachbarten Einzelzyklone, und/oder der Versatz der Partikelauslassöffnungen, der in Richtung der zweiten Senkrechten (Z) zueinander benachbarten Einzelzyklone, alternierend erfolgt. So kann beispielsweise die Partikelauslassöffnung von jedem zweiten zueinander benachbarten Einzelzyklon in Richtung zur Längsachse des Zyklonabscheiders versetzt angeordnet sein. Dies ist insbesondere bei großen Zyklonabscheidern, bei denen sehr viele Einzelzyklone zueinander benachbart sind, von Vorteil, da aufgrund des alternierenden Versatzes der Zyklonabscheider dennoch kompakt gebaut werden kann. Im Vergleich zu einem Zyklonabscheider, bei dem alle benachbarten, beispielsweise alle übereinander und/oder alle nebeneinander angeordneten, Partikelauslassöffnungen axial versetzt zueinander angeordnet sind, wird bei einem alternierenden Versatz Bauraum in Richtung der Längsachse des Zyklonabscheiders eingespart.

Des Weiteren ist es möglich, zur Einsparung des Bauraums in Richtung der Längsachse des Zyklonabscheiders nur einen Teil der Partikelaustrittsöffnungen in Richtung der Längsachse (X) des Zyklonabscheiders versetzt anzuordnen. So können beispielsweise nur die Hälfte oder nur ein Drittel der Partikelaustrittsöffnungen, beispielsweise nur die im Bereich des Partikelauslasses angeordneten Partikelaustrittsöffnungen, versetzt angeordnet sein.

Unabhängig hiervon oder in Verbindung hiermit können zur Einsparung des Bauraums in Richtung der Längsachse des Zyklonabscheiders die Einzelzyklone, insbesondere die Zellenrohre, mindestens zwei Segmenten zugeordnet sein, wobei die Zyklonzellen innerhalb eines Segmentes entlang einer Referenzfläche, beispielsweise entlang einer Referenzebenen oder entlang einer sphärischen Referenzfläche, angeordnet sind. Die Referenzflächen können parallel versetzt oder spiegelbildlich zueinander angeordnet sein.

Gemäß einer vorteilhaften Ausführungsform der vorliegenden Erfindung sind die Zellenrohre und optionalerweise der Partikelauslass einem ersten Zyklonbauteil, insbesondere einem Zyklonoberteil, zugeordnet.

In Strömungsrichtung des Gasstroms folgend ist gemäß einer vorteilhaften Ausführungsform ein zweites Zyklonbauteil, insbesondere ein Zyklonunterteil, mit einer Mehrzahl von Tauchrohren angeordnet. Die Tauchrohre weisen an ihrem der Strömungsrichtung des Gasstroms folgenden abströmseitigen Ende einen zentralen Auslass zum Auslassen des gereinigten Gasstroms insbesondere in einen gemeinsamen Sammelraum auf. Ferner sind die Tauchrohre dazu ausgebildet in die Zellenrohre aufgenommen zu werden und an ihrem jeweiligen der Strömungsrichtung des Gasstroms folgenden abströmseitigen Ende mit dem der Strömungsrichtung des Gasstroms folgenden abströmseitigen Ende der jeweiligen Zellenrohre zumindest bereichsweise verbunden zu werden.

Die Tauchrohre, insbesondere die Sockel der Tauchrohre, können jeweils die gleiche Länge aufweisen. Bei einem axialen Versatz der abströmseitigen Enden der Zellenrohre sind dann die zentralen Auslässe der Tauchrohre ebenfalls axial versetzt zueinander angeordnet.

Alternativ kann die Länge der Tauchrohre an den axialen Versatz der Zellenrohre angepasst sein, so dass die zentralen Auslässe der Tauchrohre in einer senkrecht zur Längsachse der Zellenrohre bzw. parallel zur Fallrichtung der abgeschiedenen Partikel angeordneten Ebene angeordnet sind.

Die vorliegende Erfindung betrifft des Weiteren die Verwendung eines Zyklonabscheiders gemäß der vorstehend dargelegten Art als Vorabscheider eines Luftfiltersystems für einen Druckluftkompressor oder eine Brennkraftmaschine für ein Fahrzeug, insbesondere für eine Landmaschine, beispielsweise für einen Traktor, oder für einen L[ast]K[raft]W[agen]. Insbesondere im Bereich von Brennkraftmaschinen für Fahrzeuge ist die Ausgestaltung eines effizienz- und platzoptimierten Luftfiltersystems unerlässlich, um die Abmessungen gering zu halten, und auf der anderen Seite eine dennoch hohe Effizienz der Luftfilteranordnung zu ermöglichen.

### Kurze Beschreibung der Zeichnungen

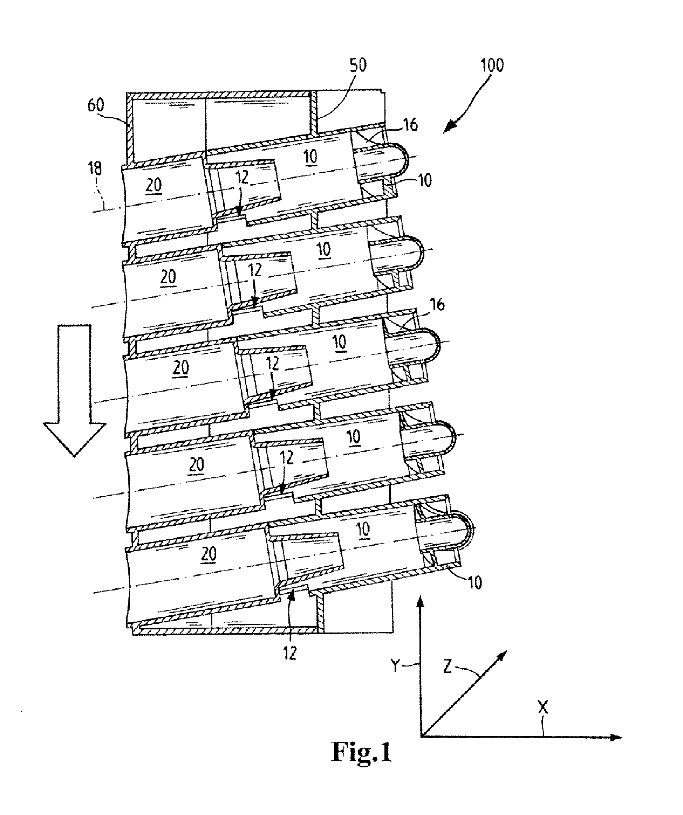

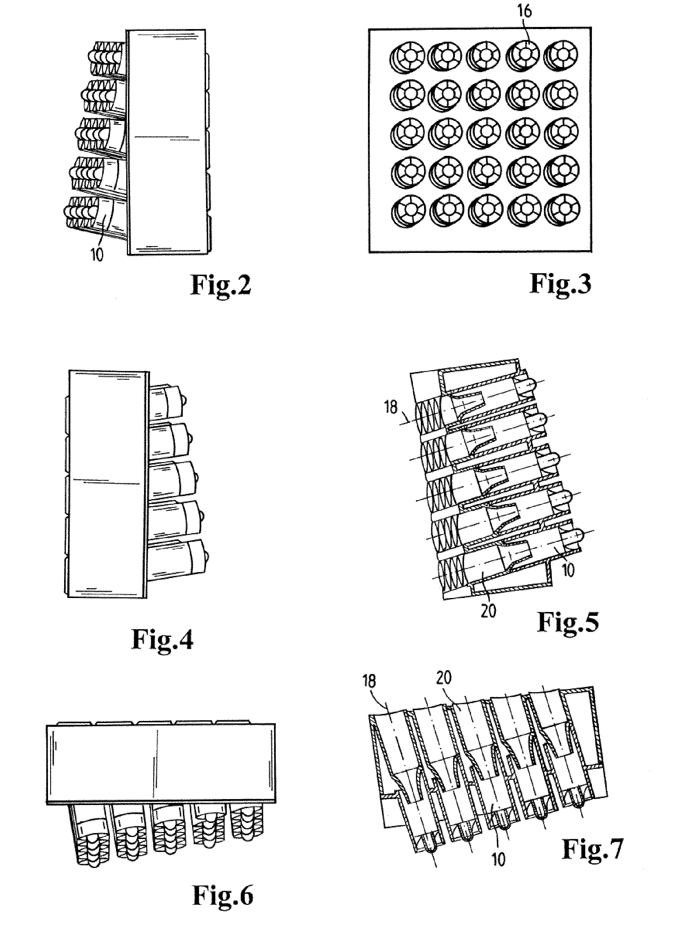

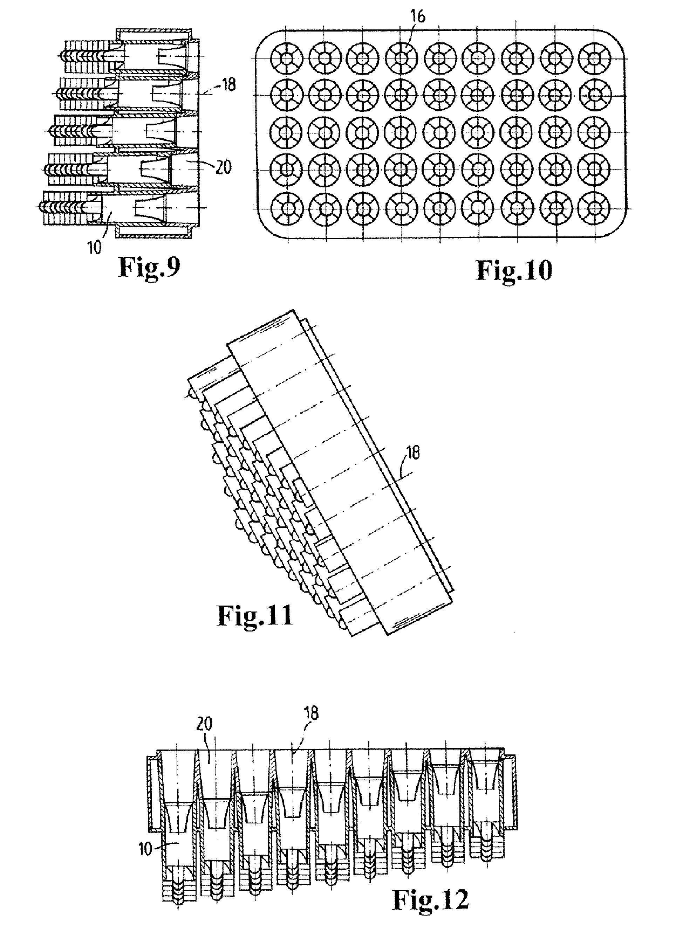

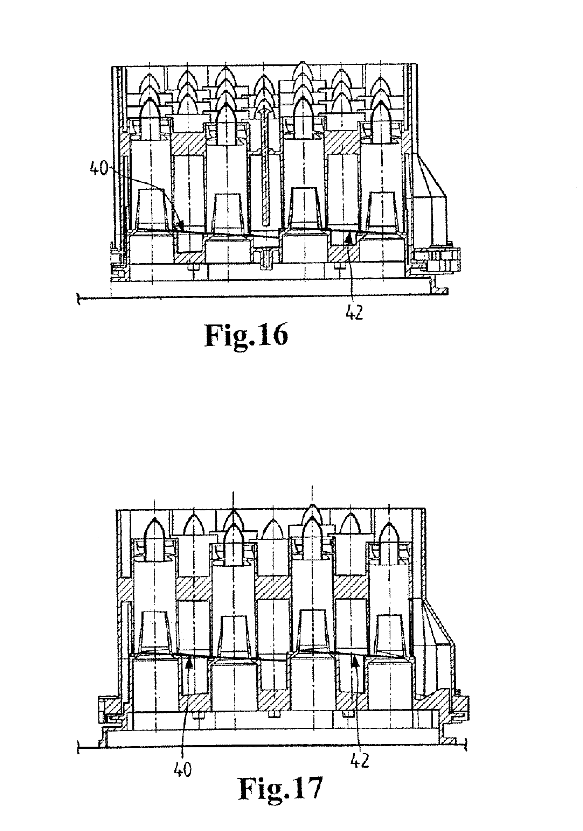

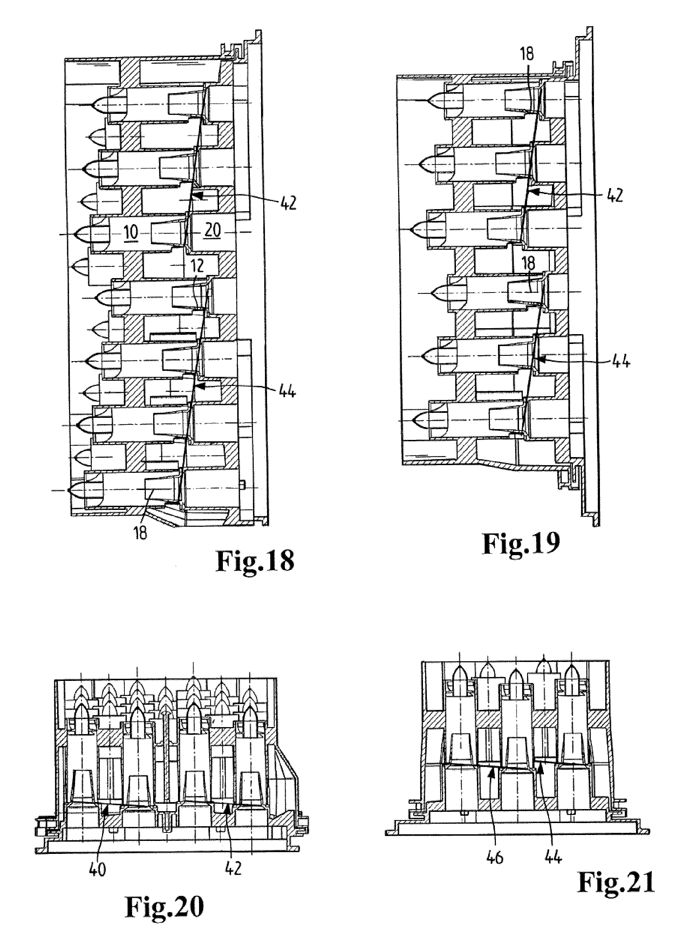

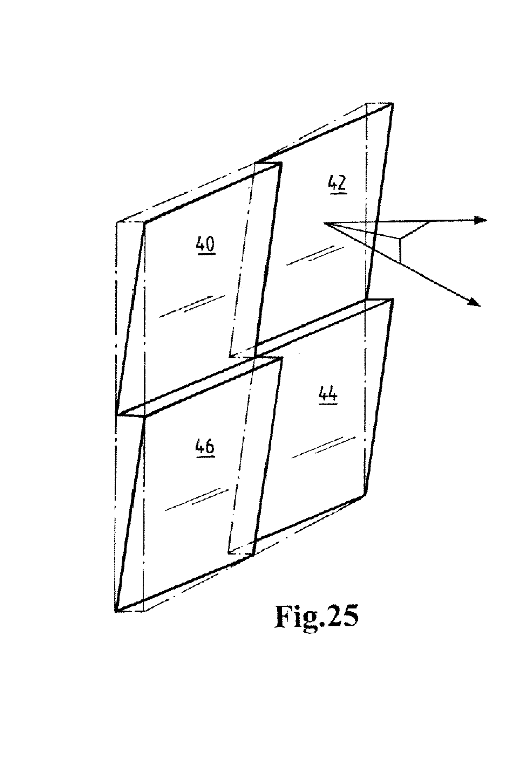

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 nachgeordneten Ansprüche verwiesen, andererseits werden weitere Ausgestaltungen, Merkmale und Vorteile der vorliegenden Erfindung nachstehend unter anderem anhand der durch die Figuren 1 bis 25 veranschaulichten vier Ausführungsbeispiele näher erläutert

Es zeigt:
- Fig. 1: in Schnittdarstellung ein erstes Ausführungsbeispiel für einen Zyklonabscheider gemäß der vorliegenden Erfindung, wobei bei diesem ersten Ausführungsbeispiel der Versatz der Partikelauslassöffnungen durch eine Schrägstellung der Zellenrohre erfolgt;
- Fig. 2: eine Seitenansicht des Zyklonabscheiders aus Figur 1;
- Fig. 3: eine Frontansicht des in den Figuren 1 bis 7 dargestellten Zyklonabscheiders;
- Fig. 4: eine weitere Seitenansicht des in den Figuren 1 bis 3 dargestellten Zyklonabscheiders;
- Fig. 5: eine Schnittansicht entlang der in Fig. 4 dargestellten Linie B-B des in den Figuren 1 bis 7 dargestellten Zyklonabscheiders;
- Fig. 6: eine Draufsicht auf den Zyklonabscheider aus Figur 1;
- Fig. 7: eine Schnittansicht entlang der in Fig. 6 dargestellten Linie A-A des in den Figuren 1 bis 7 dargestellten Zyklonabscheiders;
- Fig. 8: in Schnittdarstellung ein zweites Ausführungsbeispiel für einen Zyklonabscheider gemäß der vorliegenden Erfindung, wobei bei diesem zweiten Ausführungsbeispiel der Versatz der Partikelauslassöffnungen durch einen axialen Versatz der Zellenrohre erfolgt;
- Fig. 9: eine Schnittansicht entlang der in Fig. 10 dargestellten Linie A-A des Zyklonabscheiders aus Figur 8;
- Fig. 10: eine Frontansicht des in den Figuren 8 bis 12 dargestellten Zyklonabscheiders;
- Fig. 11: eine schräge Schnittdarstellung entlang der in Figur 10 dargestellten Linie C-C des in den Figuren 8 bis 12 dargestellten Zyklonabscheiders;
- Fig. 12: eine Schnittdarstellung entlang der in Figur 10 dargestellten Linie B-B des in den Figuren 8 bis 12 dargestellten Zyklonabscheiders;
- Fig. 13: ein drittes Ausführungsbeispiel für einen Zyklonabscheider gemäß der vorliegenden Erfindung, wobei bei diesem dritten Ausführungsbeispiel der Versatz der Partikelauslassöffnungen durch einen axialen Versatz der Zellenrohre erfolgt;
- Fig. 14: eine Schnittdarstellung entlang der in Figur 13 dargestellten Linie A-A des in den Figuren 13 bis 23 dargestellten Zyklonabscheiders;
- Fig. 15: eine Schnittdarstellung entlang der in Figur 13 dargestellten Linie B-B des in den Figuren 13 bis 23 dargestellten Zyklonabscheiders;
- Fig. 16: eine Schnittdarstellung entlang der in Figur 13 dargestellten Linie C-C des in den Figuren 13 bis 23 dargestellten Zyklonabscheiders;
- Fig. 17: eine Schnittdarstellung entlang der in Figur 13 dargestellten Linie D-D des in den Figuren 13 bis 23 dargestellten Zyklonabscheiders;
- Fig. 18: eine Schnittdarstellung entlang der in Figur 13 dargestellten Linie E-E des in den Figuren 13 bis 23 dargestellten Zyklonabscheiders;
- Fig. 19: eine Schnittdarstellung entlang der in Figur 13 dargestellten Linie F-F des in den Figuren 13 bis 23 dargestellten Zyklonabscheiders;
- Fig. 20: eine Schnittdarstellung entlang der in Figur 13 dargestellten Linie G-G des in den Figuren 13 bis 23 dargestellten Zyklonabscheiders;
- Fig. 21: eine Schnittdarstellung entlang der in Figur 13 dargestellten Linie H-H des in den Figuren 13 bis 23 dargestellten Zyklonabscheiders
- Fig. 22: eine isometrische Darstellung des in den Figuren 13 bis 23 dargestellten Zyklonabscheiders;
- Fig. 23: eine weitere isometrische Darstellung des in den Figuren 13 bis 23 dargestellten Zyklonabscheiders;
- Fig. 24: eine Frontansicht eines vierten Ausführungsbeispiels eines Zyklonabscheiders gemäß der vorliegenden Erfindung, wobei dieser Zyklonabscheider zwei mögliche Positionen für einen Partikelauslass aufweist;
- Fig. 25: in schematischer Darstellung die Neigung der vier Referenzflächen der in den Figuren 1 bis 24 dargestellten Zyklonabscheider.

Gleiche oder ähnliche Ausgestaltungen, Elemente oder Merkmale sind in den Figuren 1 bis 25 mit identischen Bezugszeichen versehen

### Ausführungsform(en) der Erfindung

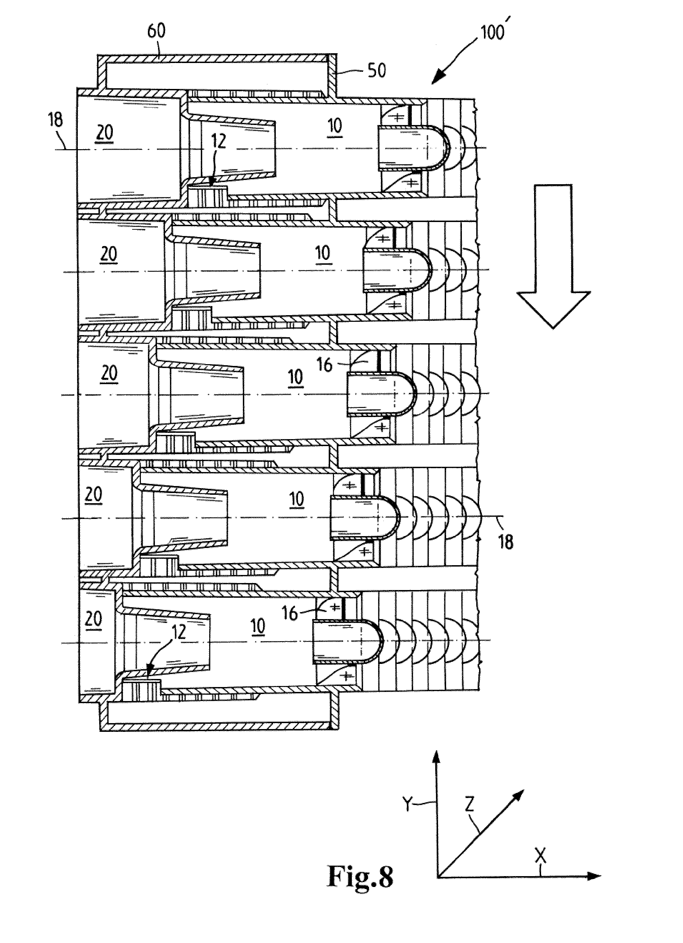

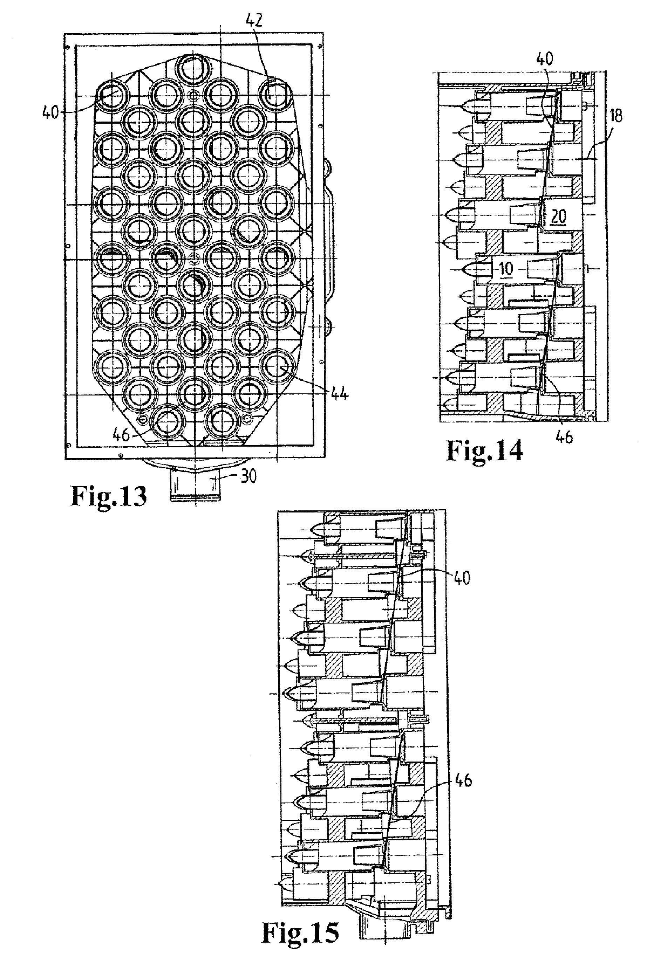

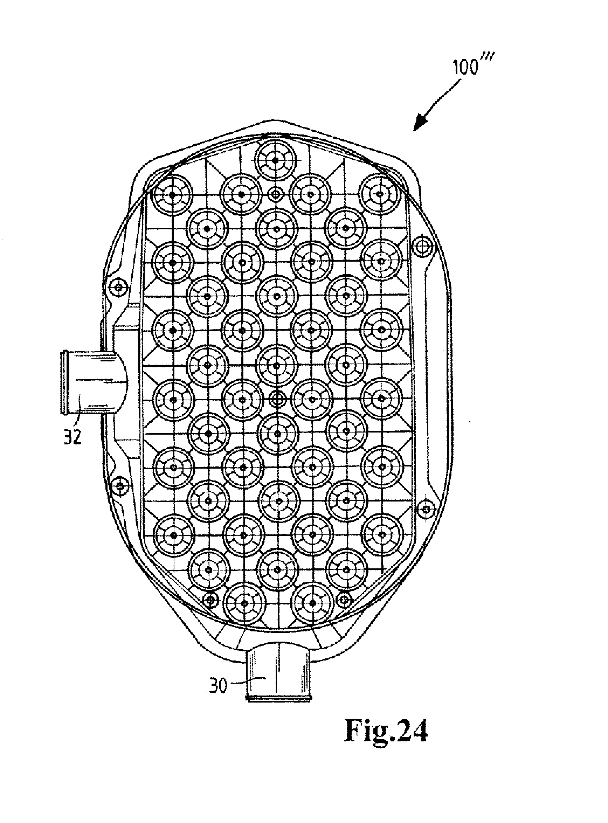

Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben) sowohl auf den in den Figuren 1 bis 7 dargestellten Zyklonabscheider 100 als auch auf den in den Figuren 8 bis 12 dargestellten Zyklonabscheider 100' als auch auf den in den Figuren 13 bis 23 dargestellten Zyklonabscheider 100" als auch auf den in den Figur 24 dargestellten Zyklonabscheider 100"'.

Im anhand der Figuren 1 bis 7 veranschaulichten ersten Ausführungsbeispiel der vorliegenden Erfindung ist ein Zyklonabscheider 100, nämlich ein als Vielzellenzyklon ausgebildeter Vorabscheider eines Luftfilters einer Brennkraftmaschine gezeigt. Dieser Zyklonabscheider 100 ist zum Abscheiden von flüssigen und/oder festen Partikeln aus einem Gasstrom ausgebildet und weist eine Zyklonanordnung mit einer Mehrzahl von Einzelzyklonen auf. Zum Abscheiden der Partikel aus dem Gasstrom weisen die Einzelzyklone jeweils ein im Wesentlichen zylindrisch ausgebildetes Zellenrohr 10 mit einer Leitvorrichtung 16 auf, wobei die Leitvorrichtung 16 dazu ausgebildet ist, den Gasstrom in Rotation zu versetzen.

Die Zellenrohre 10 sind in Reihen angeordnet, die in Hochrichtung (Y) und in Querrichtung (Z) zum Zyklonabscheider 100 verlaufen. Die Zellenrohre 10 sind also sowohl übereinander als auch nebeneinander angeordnet. Dabei können die benachbarten Einzelzyklone miteinander in Kontakt stehen oder zueinander beabstandet sein.

Zum Ableiten der abgeschiedenen Partikel aus der Zyklonanordnung, also aus der Anordnung der Einzelzyklone, weist der Zyklonabscheider 100 mindestens einen senkrecht zur Längsachse (X) des Zyklonabscheiders 100 angeordneten Partikelauslass 30, 32 auf. Aufgrund der in Figur 24 dargestellten beiden Partikelauslässe 30, 32 kann der Partikelaustrag durch den Partikelauslass 30, 32 sowohl in Querrichtung als auch in Hochrichtung erfolgen. In Gebrauchsstellung kann der Zyklonabscheider 100"' also sowohl in Querrichtung als auch in Hochrichtung angeordnet sein. Wie in Figur 24 gezeigt, kann bei einem im Wesentlichen ovalen Zyklonabscheider der Partikelauslass 30, 32 also sowohl an der Querseite bzw. kurzen Seite des Zyklonabscheiders als auch an der Längsseite bzw. langen Seite des Zyklonabscheiders 100"' angeordnet sein. Die Fallrichtung der abgeschiedenen Partikel erfolgt jeweils nach unten, was in den Figuren 1 und 8 mit einem Doppelpfeil dargestellt ist.

Die Strömungsrichtung des Gasstroms erfolgt im Zyklonabscheider 100 im Wesentlichen entlang der Längsachse (X) des Zyklonabscheiders 100.

Zur gezielten Ableitung der durch die Rotation abgeschiedenen Partikel zum Partikelauslass 30, 32 weisen die Zellenrohre 10 an ihrem abströmseitigen Ende jeweils mindestens eine dem Partikelauslass 30, 32 zugewandte Partikelauslassöffnung 12 auf.

Die Partikelauslassöffnungen 12 der in Richtung einer ersten Senkrechten (Y) zur Längsachse (X) des Zyklonabscheiders 100 zueinander benachbarten Einzelzyklone, also der in Richtung der Höhe der Zyklonanordnung übereinander angeordneten Einzelzyklone, sind in Richtung der Längsachse (X) des Zyklonabscheiders 100 versetzt zueinander angeordnet. Durch den Versatz der Partikelauslassöffnungen 12 oder Staubaustrittsfenster wird eine große Anhäufung des Staubes, der durch das Staubaustrittsfenster austritt, vermieden.

Wie in den Figuren 13 bis 23 und 25 dargestellt, sind die Zellenrohre 10 einer Mehrzahl von Segmenten zugeordnet. Im vorliegenden Ausführungsbeispiel sind die Zellenrohre 10 vier Segmenten zugeordnet, wobei die Zellen zueinander einen axialen Versatz aufweisen und jeweils innerhalb eines Segments entlang einer Referenzfläche 40, 42, 44, 46, hier entlang einer Referenzebene, angeordnet sind.

Die Referenzflächen 40, 42, 44, 46 sind so angeordnet, dass ein axialer Versatz übereinander angeordneter Partikelauslassöffnungen 12 sowohl in Hochrichtung des Zyklonabscheiders als auch in Querrichtung des Zyklonabscheiders entsteht. Auf diese Wiese wird bei beiden Anordnungen des Partikelauslasses 30, 32 ein besserer Partikelaustrag erreicht wird.

Die Partikelauslassöffnungen oder Fenster 12 in den Zellenrohren oder Stutzen 10 sind dabei jeweils in Bezug auf die Position der Partikelauslässe oder Austragsstutzen 30, 32 angeordnet, was bei der Herstellung durch Wechseleinsätze im Zyklon(oberteil)werkzeug erreicht werden kann.

Bevorzugt sind die Partikelauslassöffnungen 12 in Hochrichtung (Y) und/oder in Querrichtung (Z) zum Zyklonabscheider umso weiter nach axial, beispielsweise nach axial hinten, versetzt, je weiter entfernt sie von den Partikelauslässen 30, 32 angeordnet sind. Vorzugsweise ist also die Neigung der Referenzfläche 40, 42, 44, 46 in Längsrichtung des Zyklonabscheiders 100" stärker ausgeprägt als in Querrichtung des Zyklonabscheiders 100", denn bei einer Gebrauchsstellung des Zyklonabscheiders 100" in Längsrichtung sind mehr Einzelzyklone in Fallrichtung der abgeschiedenen Partikel angeordnet als bei einer Gebrauchsstellung des Zyklonabscheiders 100" in Querrichtung.

Bei dem in den Figuren 1 bis 7 dargestellten ersten Ausführungsbeispiel des Zyklonabscheiders 100 erfolgt der Versatz der Partikelauslassöffnungen 12 durch eine Schrägstellung der Zellenrohre 10, wobei diese bevorzugt wie gezeigt auf einer Ebene enden.

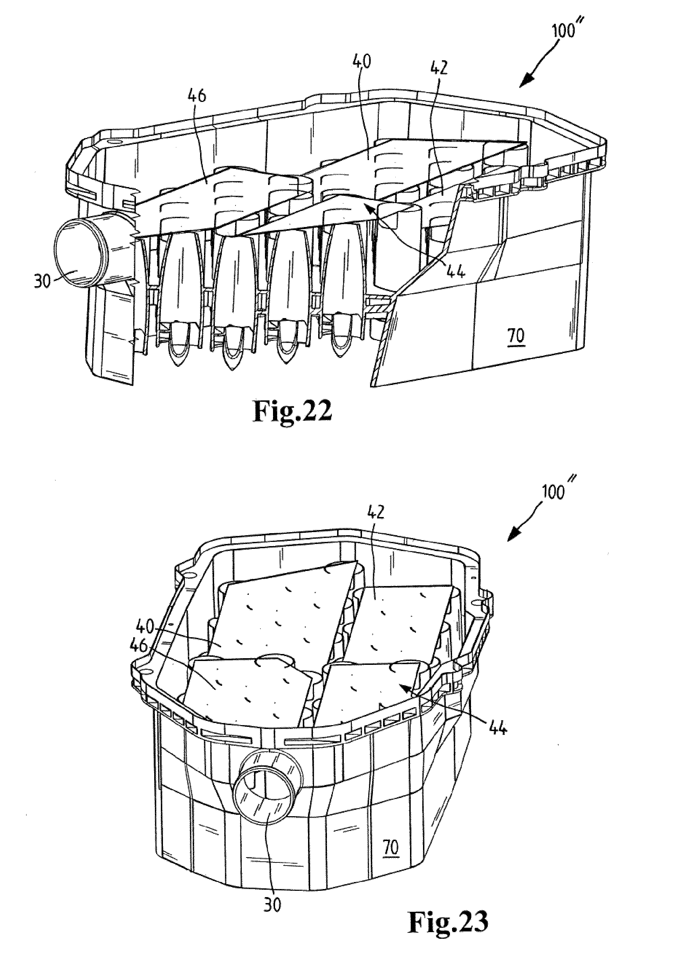

Der Partikelauslass 30, 32 (vgl. Figuren 13, 22, 23 und 24) ist an einem Gehäuse 70 (vgl. Fig. 22 und 23) des Zyklonabscheiders 100 angeordnet. Der Versatz der Partikelauslassöffnungen 12 der in Richtung der ersten Senkrechten Y zueinander benachbarten Einzelzyklone und/oder der Partikelauslassöffnungen 12 der in Richtung der zweiten Senkrechten Z zueinander benachbarten Einzelzyklone erfolgt bei dem in Figuren 1 bis 7 dargestellten ersten Ausführungsbeispiel durch eine Schrägstellung der Längsachse der Einzelzyklone zur Längsachse des Gehäuses des Zyklonabscheiders 100.

Bei dem in den Figuren 8 bis 12 dargestellten zweiten Ausführungsbeispiel des Zyklonabscheiders 100' und dem in den Figuren 13 bis 24 dargestellten dritten Ausführungsbeispiel des Zyklonabscheiders 100" erfolgt der Versatz der Partikelauslassöffnungen 12 durch einen axialen Versatz der Zellenrohre 10. Dies hat den Vorteil einer besseren Herstellbarkeit. Zudem kann der Versatz der Zellenrohre 10 alternierend gestaltet werden kann, was insbesondere bei großen Zyklonabscheidern mit einer Vielzahl an Einzelzyklonen vorteilhaft ist.

Bei dem in den Figuren 13 bis 24 dargestellten dritten Ausführungsbeispiel des Zyklonabscheiders 100" sind die Zellenrohre 10 in Gebrauchsstellung des Zyklonabscheiders in Reihen angeordnet, die im Wesentlichen 45 Grad geneigt zur Hochrichtung Y und zur Querrichtung Z des Zyklonabscheiders 100" verlaufen. In der Frontansicht (vgl. Figur 13) des Zyklonabscheiders 100" sind die Zellenrohre 10 also in Reihen angeordnet, die etwa 45 Grad zur Ordinatenachse Y geneigt sind. Mit anderen Worten sind die Zellenrohre 10 in Bezug auf die Austragsrichtung der Partikel (vgl. Doppelpfeil in Fig. 1 und Fig. 8) rautenförmig angeordnet. Diese Anordnung der Zellenrohre 10 in Reihen, die etwa 45 Grad zur ersten Senkrechten Y geneigt sind, hat den Vorteil, dass die in Gebrauchsstellung des Zyklonabscheiders 100" untereinander angeordneten Zellenrohre 10 voneinander beabstandet sind. Durch die Anordnung der in Gebrauchsstellung des Zyklonabscheiders 100" übereinander angeordneten Zellenrohre 10 nicht in dichtester Packung sondern mit Abstand zueinander wird im Vergleich zu in senkrechten Reihen angeordneten Zellenrohren 10 ein besserer Partikelaustrag aus dem Zyklonabscheider 100" erreicht, weil eine Anhäufung der abgeschiedenen Partikel zwischen zwei Zellenrohren 10 und somit ein Zusetzen der Zellenrohre 10 vermieden wird.

## Patentansprüche

1. Zyklonabscheider (100; 100'; 100"; 100"') zum Abscheiden von flüssigen und/ oder festen Partikeln aus einem Gasstrom, aufweisend
- eine Zyklonanordnung mit einer Mehrzahl von Einzelzyklonen, die zum Abscheiden der Partikel aus dem Gasstrom jeweils ein Zellenrohr (10) mit einer Leitvorrichtung (16) aufweisen, wobei die Leitvorrichtung (16) dazu ausgebildet ist, den Gasstrom in Rotation zu versetzen, und
- mindestens einen senkrecht zur Längsachse (X) des Zyklonabscheiders (100; 100'; 100"; 100"') angeordneten Partikelauslass (30, 32) zum Ableiten der abgeschiedenen Partikel aus der Zyklonanordnung, wobei die Zellenrohre (10) zur gezielten Ableitung der durch die Rotation abgeschiedenen Partikel zum Partikelauslass (30, 32) jeweils mindestens eine dem Partikelauslass (30, 32) zugewandte Partikelauslassöffnung (12) aufweisen,
**dadurch gekennzeichnet, dass** die Partikelauslassöffnungen (12) von zumindest einem Teil der in Richtung einer ersten Senkrechten (Y) zur Längsachse (X) des Zyklonabscheiders (100; 100'; 100"; 100"') zueinander benachbarten Einzelzyklone, beispielsweise der in Richtung der Höhe der Zyklonanordnung übereinander angeordneten Einzelzyklone, in Richtung der Längsachse (X) des Zyklonabscheiders (100; 100'; 100"; 100"') versetzt zueinander angeordnet sind.

2. Zyklonabscheider gemäß Anspruch 1, **dadurch gekennzeichnet, dass** die Partikelauslassöffnungen (12) von zumindest einem Teil der in Richtung einer zweiten Senkrechten (Z), die zur Längsachse (X) des Zyklonabscheiders (100; 100'; 100"; 100"') sowie zur ersten Senkrechten (Y) senkrecht angeordnet ist, beispielsweise in Richtung der Querrichtung der Zyklonanordnung, zueinander benachbarten Einzelzyklone in Richtung der Längsachse (X) des Zyklonabscheiders (100; 100'; 100"; 100"') versetzt zueinander angeordnet sind.

3. Zyklonabscheider gemäß Anspruch 1 oder 2, **dadurch gekennzeichnet, dass** der Versatz der Partikelauslassöffnungen (12) in Richtung der Längsachse (X) des Zyklonabscheiders (100; 100'; 100"; 100"') durch eine Schrägstellung der Längsachse (18) der Zellenrohre (10) zur Längsachse (X) des Zyklonabscheiders erfolgt.

4. Zyklonabscheider gemäß Anspruch 1 oder 2, **dadurch gekennzeichnet, dass** die Längsachse (18) der Zellenrohre (10) parallel zur Längsachse (X) des Zyklonabscheiders angeordnet ist und der Versatz der Partikelauslassöffnungen (12) in Richtung der Längsachse (X) des Zyklonabscheiders (100; 100'; 100"; 100"') durch einen Versatz der Partikelauslassöffnungen (12) in Richtung der Längsachse der Zellenrohre (10), beispielsweise durch eine unterschiedliche Länge der benachbarten Zellenrohre oder durch einen axialen Versatz der einzelnen Zellenrohre zueinander, erfolgt.

5. Zyklonabscheider gemäß mindestens einem der Ansprüche 1 bis 4, **dadurch gekennzeichnet, dass** die Größe des Versatzes der Partikelauslassöffnungen in Richtung der Längsachse (X) des Zyklonabscheiders in Abhängigkeit von der Anzahl der zueinander benachbarten Einzelzyklone und/oder der Entfernung der Staubaustrittsöffnung (30, 32) zum Partikelauslass (30, 32), dem diese Partikelauslassöffnung (12) zugewandt ist, gewählt wird.

6. Zyklonabscheider gemäß mindestens einem der Ansprüche 1 bis 5, **dadurch gekennzeichnet, dass** der Versatz der Partikelauslassöffnungen (12) der in Richtung der ersten Senkrechten (Y) zueinander benachbarten Einzelzyklone und/ oder der Versatz der Partikelauslassöffnungen (12) der in Richtung der zweiten Senkrechten (Z) zueinander benachbarten Einzelzyklone alternierend erfolgt.

7. Zyklonabscheider gemäß mindestens einem der Ansprüche 1 bis 6, **dadurch gekennzeichnet, dass** die Einzelzyklone mindestens zwei Segmenten zugeordnet sind, wobei die Zyklonzellen innerhalb eines Segmentes entlang einer Referenzfläche (40, 42, 44, 46), beispielsweise entlang einer Referenzebenen oder entlang einer sphärischen Referenzfläche, angeordnet sind.

8. Zyklonabscheider gemäß Anspruch 7, **dadurch gekennzeichnet, dass** die abströmseitigen Enden von zumindest einem Teil der in Richtung der ersten Senkrechten (Y) zueinander benachbarten Einzelzyklone und/oder von zumindest einem Teil der in Richtung der zweiten Senkrechten (Z) zueinander benachbarten Einzelzyklone in Richtung der Längsachse des Zyklonabscheiders (100; 100'; 100"; 100"') versetzt zueinander angeordnet sind.

9. Zyklonabscheider gemäß mindestens einem der Ansprüche 1 bis 8, **dadurch gekennzeichnet, dass**
- die Zellenrohre (10) einem ersten Zyklonbauteil (50) zugeordnet sind und
- in Strömungsrichtung des Gasstroms folgend ein zweites Zyklonbauteil (60) mit einer Mehrzahl von Tauchrohren (20) angeordnet ist, wobei die Tauchrohre (20) an ihrem der Strömungsrichtung des Gasstroms folgenden abströmseitigen Ende einen zentralen Auslass zum Auslassen des gereinigten Gasstroms aufweisen und wobei die Tauchrohre (20) dazu ausgebildet sind, in die Zellenrohre (10) aufgenommen zu werden und an ihrem jeweiligen der Strömungsrichtung des Gasstroms folgenden abströmseitigen Ende mit dem der Strömungsrichtung des Gasstroms folgenden abströmseitigen Ende der jeweiligen Zellenrohre (10) zumindest bereichsweise verbunden zu werden.

10. Verwendung eines Zyklonabscheiders (100; 100'; 100"; 100"') gemäß mindestens einem der Ansprüche 1 bis 9 als Vorabscheider eines Luftfiltersystems für eine Brennkraftmaschine für ein Fahrzeug, insbesondere für eine Landmaschine, beispielsweise für einen Traktor, oder für einen L[ast]K[raft]W[agen].
